(19) Europäisches Patentamt
European Patent Office
Office européen des brevets

(11) **EP 2 163 300 B1**

(12) **EUROPÄISCHE PATENTSCHRIFT**

(45) Veröffentlichungstag und Bekanntmachung des Hinweises auf die Patenterteilung:
**22.12.2021 Patentblatt 2021/51**

(51) Int Cl.:
**B01J 8/44** (2006.01)    **B01D 3/00** (2006.01)
**F26B 3/08** (2006.01)

(21) Anmeldenummer: **09075371.6**

(22) Anmeldetag: **17.08.2009**

(54) **VERWENDUNG EINER VERTEILERPLATTE ZUM AUFTEILEN VON FLUIDSTRÖMEN**

USE OF A DISTRIBUTION PLATE FOR SPLITTING FLUID FLOWS

UTILISATION D'UNE PLAQUE DE DISTRIBUTION D'ÉCOULEMENTS FLUIDIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.08.2008 DE 102008039947**

(43) Veröffentlichungstag der Anmeldung:
**17.03.2010 Patentblatt 2010/11**

(73) Patentinhaber: **Covestro Intellectual Property GmbH & Co. KG**
**51373 Leverkusen (DE)**

(72) Erfinder:
• **Keggenhoff, Berthold**
**47839 Krefeld (DE)**
• **Bolton, Jeffrey**
**40489 Düsseldorf Einbrungen (DE)**
• **Steffens, Friedhelm**
**51373 Leverkusen (DE)**

• **Seekamp, Dr. Marc**
**51061 Köln (DE)**
• **Ruffert, Gerhard**
**51377 Leverkusen (DE)**
• **Kern, Jürgen**
**65366 Geisenheim (DE)**
• **Runowski, Thomas**
**40597 Düsseldorf (DE)**

(74) Vertreter: **Levpat**
**c/o Covestro AG**
**Gebäude 4825**
**51365 Leverkusen (DE)**

(56) Entgegenhaltungen:
EP-A- 0 299 279     EP-A- 0 721 798
EP-A2- 0 111 941     WO-A-01/72409
WO-A-2007/079939     JP-A- S5 916 502
JP-A- S51 110 478     US-A- 3 853 986
US-A- 5 161 315

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Beschrieben

wird ein Verfahren zum gleichmäßigen Aufteilen von Fluidströmen auf mehrere Fluidteilströme in chemischen Apparaten, die im Vergleich zu herkömmlichen Vorrichtungen eine reduzierte Neigung zur Bildung von Ablagerungen haben. Die Erfindung betrifft eine Verwendung einer Verteilvorrichtung zum gleichmäßigen Aufteilen von Fluidströmen auf mehrere Teilströme zur Reduzierung der Neigung zur Bildung von Ablagerungen an der Verteilvorrichtung gemäß Patentanspruch 1.

In der chemischen Technik werden in den verwendeten chemischen Reaktionsapparaten häufig Vorrichtungen eingesetzt, die innerhalb der Reaktionsapparate eine Gleichverteilung von Fluidströmen erzeugen sollen. Diese Vorrichtungen werden häufig auch als Einbauten bezeichnet.

Eine spezielle Ausführungsform solcher Einbauten bilden sogenannte Böden, unter denen sogenannte Verteilerböden einen weiteren Sonderfall bilden. Insbesondere in chemischen Reaktionsapparaten, wie etwa Kolonnen oder Wärmeübertragern, finden solche Verteilerböden häufig Anwendung.

Üblicherweise sind solche Verteilerböden so ausgestaltet, dass eine horizontale, ebene Fläche (der Boden) mit Durchbrüchen versehen wird, durch die der jeweilige Fluidstrom in den restlichen Raum des chemischen Apparats eintritt. Durch die Strömung durch die Durchbrüche entstehen an Orten der geometrischen Unstetigkeit (z.B. Winkel von 90° an Öffnungen oder Durchbrüchen wie Bohrlöchern etc.) üblicherweise Zonen an dem Verteilerboden, die durch eine verlangsamte Fluidgeschwindigkeit oder durch eine Rezirkulationsströmung gekennzeichnet sind.

US 5,161,315 befasst sich insbesondere mit einer Heißluft-Behandlung diverser Agrarerzeugnisse (vgl. Spalte 2, "Summary of the invention"). Durch Öffnungen 20 wird heiße Luft geleitet, die die zu behandelnden Partikel in wirbelnde Bewegung versetzt. Verstopfungen der Öffnungen können dann auftreten, wenn Partikel unter der Einwirkung der Beförderungsschaufeln 27 in die Öffnungen gedrückt werden (Spalte 7, Zeile 62 bis Spalte 8, Zeile 2).

EP 0 721 798 A2 befasst sich mit der Gasphasenpolymerisation von Olefinen. Auch hier ist das die Öffnungen durchtretende Fluid ein Gas, nämlich das zu polymerisierende Olefin, welches als solches keine Verstopfungen hervorrufen kann. Erst nach Kontakt mit dem Katalysator, in der "fluidized bed zone" 1c (FIG. 1 von D2), bildet sich Polymer, welches unter bestimmten Umständen in die "gas distribution plate" 2 gelangen und dort zu Verstopfungen führen kann.

EP 0 299 279 A1 befasst sich mit der Trocknung feiner Feststoffpartikel mittels Durchleitens von bspw. heißer Luft (vgl. Seite 4, Zeilen 5 bis 16). Auch hier kann eine Verstopfung der Öffnungen der Verteilervorrichtung durch das durchgeleitete Fluid selbst nicht auftreten; Verstopfungen können höchstens durch in die Öffnungen gelangtes Produkt P entstehen.

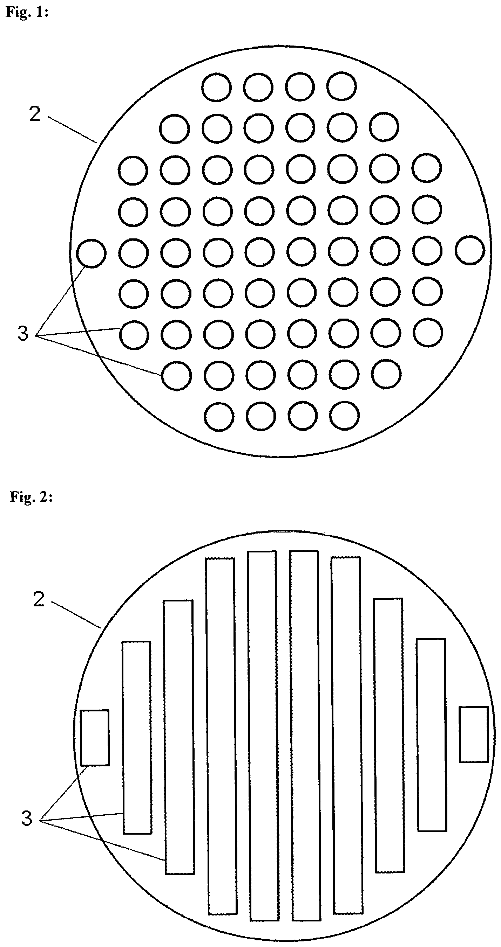

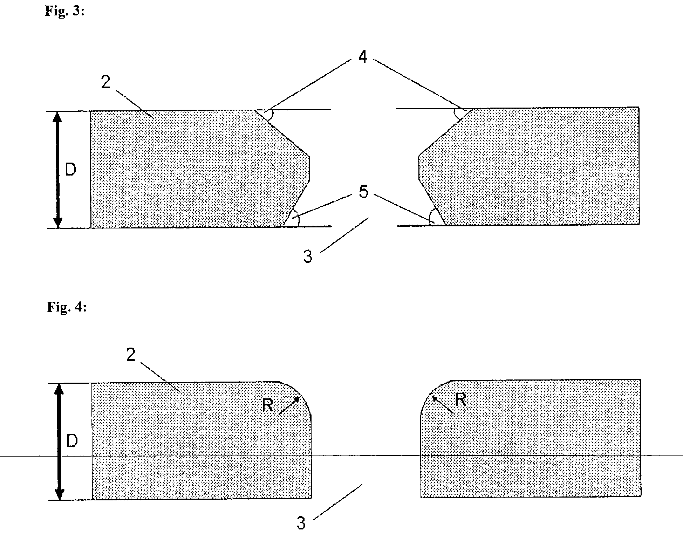

Die japanische Patentanmeldung JP51 -110478A befasst sich mit einer Vorrichtung zum Inkontaktbringen eines Gas- mit einem im Gegenstrom fließenden Flüssigkeitsstrom mithilfe einer "Schaumschicht". Die Vorrichtung soll einen intensiven Gas-Flüssigkeits-Kontakt bzw. einen großen Massentransfer ermöglichen, über einen weiten Bereich an Betriebsbedingungen stabil und möglichst störungsfrei betreibbar sein, ohne dass als Folge des Inkontakttretens von Gas und Flüssigkeit hohe Druckverluste auftreten, wobei die Vorrichtung ferner möglichst preiswert und einfach aufgebaut sein soll, und zwar auch dann, wenn große Volumina an Gas bzw. Flüssigkeit in der Vorrichtung behandelt werden sollen. Zu diesem Zweck schlägt die Patentanmeldung (vgl. FIG. 1 und die zugehörigen Textpassagen) eine für Gas-Flüssigkeits-Gegenstrom ausgelegte Mehrstufenkolonne vor. In dieser Kolonne tritt unten über einen Einlass 1 ein Gasstrom ein und fließt über einen Gasgleichrichter 8 nach oben. Dabei durchströmt das Gas mehrere Siebböden 7, die so ausgelegt sind, dass sie eine Stromlinienströmung gewährleisten. Im oberen Teil der Kolonne wird Flüssigkeit über einen Einlass 3 eingeführt. Die Flüssigkeit durchströmt die Kolonne von oben nach unten, also gegenläufig zum Gasstrom, und strömt dabei ebenso wie das Gas durch die Siebböden 7. Im Bereich oberhalb eines jeden Siebbodens 7 bildet sich eine "Schaumschicht" 6 aus, in welcher turbulente Strömungsbedingen herrschen. Die Siebböden 7 bestehen jeweils aus einem Boden 9 mit eingearbeiteten Durchtrittsöffnungen 10 (vgl. FIG. 2 und 3). Die Siebböden 7 arbeiten derart, dass der nach oben strömende Gasstrom 15 zunächst einen sich verengenden Bereich der Durchtrittsöffnung 10, dann einen Bereich konstanten Querschnitts und schließlich einen sich aufweitenden Bereich durchläuft

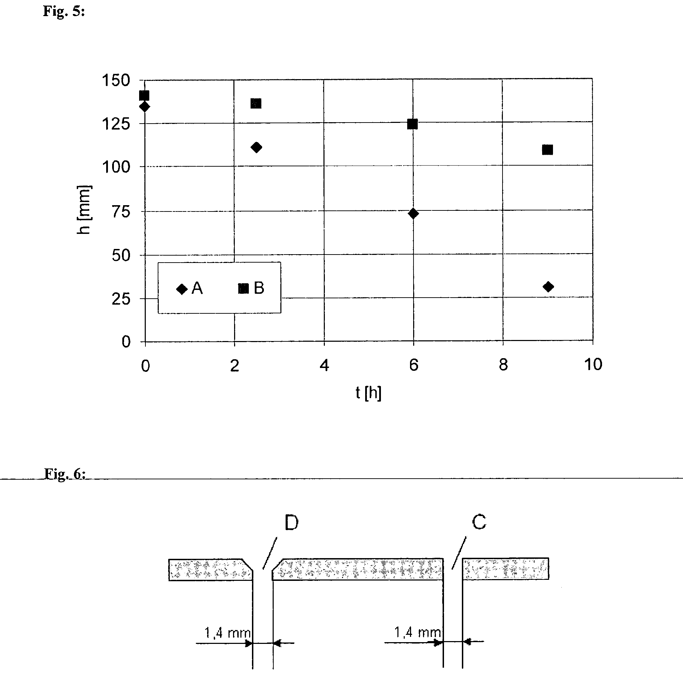

Auf diese Weise wird der Gasstrom in den Bereich der Schaumschicht 6 hinein verdüst. Der Flüssigkeitstrom 11 fließt von oben kommend nach unten durch die Schaumschicht und schließlich durch die Durchtrittsöffnungen 10, und trifft im Verlaufe dieses Vorgangs auf das in die Schaumschicht hinein verdüste Gas. Dabei wird ein sehr feiner Schaum 13 gebildet, der ständig kollabiert und neu gebildet wird. Dies ermöglicht eine intensive, homogene Durchdringung von Gas und Flüssigkeit. Die Abbildungen FIG. 5 bis FIG. 8 zeigen weitere mögliche Ausgestaltungen dieses Prinzips. Allen Ausgestaltungen ist gemeinsam, dass sich die Durchtrittsöffnungen 10 im Bereich des Eintritts der Flüssigkeit 11 verengen und im Bereich des Austritts der Flüssigkeit 11 aufweiten. Diese Bereiche des Verengens und Aufweitens dienen der Ausbildung der Schaumschicht 6 und insbesondere des sehr feinen Schaums 13. Es soll hierdurch eine intensive Durchmischung von Gas- und Flüssigphase gewährleistet werden.

Die europäische Patentanmeldung EP 0 111 941 A2 befasst sich mit Böden mit Flüssigkeitszwangsführung (auch "Kreuzstromböden" genannt) für Destillier- und/oder Absorptionskolonnen. Kolonnen mit Kreuzstromböden besitzen innerhalb des Kolonnenkörpers mindestens einen Boden, über den hinweg Flüssigkeit von einer Zulaufseite zu einer Ablaufseite fließt und welcher über Öffnungen verfügt, durch welche heraufströmender Dampf mit der über den Boden fließenden Flüssigkeit in Kontakt treten kann.

US 3,853,986 befasst sich mit einem kaskadierten Blasensäulenreaktor und einem Verfahren zur Reaktion einer Flüssigkeit mit einem Gas oder mit einem nicht-gasförmigen Reaktanden in Gegenwart eines inerten oder reaktiven Gases in einem deartigen Reaktor.

Die japanische Patentanmeldung JP S59 16502 A befasst sich mit perforierten Platten zur Regulierung oder zum Verteilen bzw. Sammeln von Fluiden in gepackten Säulen, und zwar Chromatographiesäulen.

Die internationale Patentanmeldung WO 01/72409 A1 betrifft ein Bodenelement für eine Vorrichtung zum Behandeln von partikelförmigem Gut, mit einem flächigen Boden, in dem zahlreiche Öffnungen vorgesehen sind, über die ein Behandlungsmedium durch den Boden führbar ist, und mit Mitteln, die dem durch den Boden strömenden Behandlungsmedium eine Bewegungskomponente in Richtung der Bodenebene auferlegen.

Die internationale Patentanmeldung WO 2007/079939 A1 betrifft einen Verteilerboden, insbesondere einen Düsenverteilerboden, zur gleichmäßigen Einleitung von, insbesondere mit Feststoffteilchen beladenem, Prozessgas, gegebenenfalls zur Bildung einer Wirbelschicht, in einen über dem Verteilerboden angeordneten Prozessraum, gebildet durch Reaktorwände eines Reaktors zur metallurgischen, insbesondere thermischen, Behandlung von Einsatzstoffen, wobei der Verteilerboden eine Vielzahl an Öffnungen aufweist.

Wenn das Fluid, das durch die Öffnungen oder Durchbrüche in den chemischen Reaktionsapparat eintritt, gelöste Stoffe, oder Suspensionen von Partikeln umfasst, so entstehen üblicherweise Ablagerungen von diesen Stoffen und/oder Partikeln in Zonen mit verlangsamter Fluidgeschwindigkeit oder Rezirkulationsströmung. Dieses Phänomen ist allgemein bekannt und zum Beispiel in H. Müller-Steinhagen "Heat-Exchanger Fouling - Mitigation and Cleaning Technologies" Publico Publications, pp. 8-9, Essen 2000. ISBN 3-934736-00-9 beschrieben.

In der IN-A-192183, wird eine Vorrichtung offenbart, die eine Gleichverteilung von Flüssigkeiten in Kolonnen ermöglichen soll. Diese Vorrichtung ist gekennzeichnet durch einen Hauptverteiler (10) und an diesen angeschlossene Unterverteiler (11), die wiederum mit den eigentlich verteilenden Verteilerplatten (4) über eine Röhre (2) verbunden sind. Die eigentliche Gleichverteilung der Flüssigkeit geschieht durch Herabtropfen von der Verteilerplatte (4) entlang von Führungswänden (5), die strukturiert sind und im Sinne eines schmalen Spaltes um die Verteilerplatte (4) herum angeordnet sind. Die genaue geometrische Ausgestaltung der in der Vorrichtung enthaltenen Durchbrüche wird nicht offenbart. Dabei beziehen sich die benutzten Referenzzeichen auf die in IN-A-192183 benutzten Referenzzeichen.

Die Vorrichtung ist nachteilig, weil insbesondere der dünne Spalt zwischen Verteilerplatte (4) und Führungswand (5) eine Zone bildet, in der die Strömung der Flüssigkeit stark verlangsamt und gegebenenfalls einer Rezirkulation unterworfen wird. Daher ist bei Verwendung einer solchen Vorrichtung davon auszugehen, dass es zu Ablagerungen von in der Flüssigkeit gelösten/suspendierten Stoffen kommt. Weiter umfasst die Vorrichtung viele Orte geometrischer Unstetigkeit, wie etwa die Kante der Verteilerplatte (4), sowie die Bohrungen der Ausflussöffnungen (12), an denen eine Ablagerung aus den oben genannten Gründen sehr wahrscheinlich ist.

In der DE-A-2 752 391 wird eine Vorrichtung zur Gleichverteilung von Flüssigkeiten offenbart, die aus parallelen Rinnen mit Überlaufkanten (3, 6), die V-förmige Flüssigkeitsaustrittsöffnungen besitzen, besteht. Die Menge an verteilter Flüssigkeit wird durch die Einstellung eines Abstandes (7) zwischen zwei parallelen Überlaufkanten, sowie durch die Größe und Anzahl der V-förmige Flüssigkeitsaustrittsöffnungen bestimmt. Die genaue geometrische Ausgestaltung der V-förmigen Flüssigkeitsaustrittsöffnungen, sowie insbesondere der Anstellwinkel werden nicht offenbart. Dabei beziehen sich die benutzten Referenzzeichen auf die in DE-A-2 752 391 benutzten Referenzzeichen.

Die Vorrichtung besitzt eine hohe Anzahl an Orten geometrischer Unstetigkeit. So ist zum Beispiel die Sicke der V-förmigen Flüssigkeitsaustrittsöffnungen als auch die Überlaufkante an sich durch solche geometrischen Unstetigkeiten gekennzeichnet. Es ist also davon auszugehen, dass insbesondere an solchen Orten verlangsamte Flüssigkeitsgeschwindigkeiten und/oder Rezirkulationsströmungen auftreten und sich hierdurch Ablagerungen bilden, wenn die zu verteilende Flüssigkeit gelöste/suspendierte Stoffe umfasst.

Ausgehend vom Stand der Technik und den hierin festzustellenden Problemen bezüglich des Aufteilens von. Flüssigkeitsströmen, die gelöste und/oder suspendierte Stoffe enthalten, stellt sich die Aufgabe ein Verfahren bereitzustellen, das ein gleichmäßiges Aufteilen von Fluidströmen (Flüssigkeitsströmen) mit gelösten und/oder suspendierten Stoffen in chemischen Apparaten ermöglicht, ohne dass es zu Ablagerungen der gelösten und/oder suspendierten Stoffe an der Vorrichtung kommt.

Beschrieben wird ein Verfahren zum Aufteilen von Fluidströmen auf mehrere Fluidteilströme in chemischen Apparaten, bei dem ein zu verteilendes Fluid einen chemischen Apparat, der eine Verteilvorrichtung aufweist, die mindestens eine Platte (2) mit mehreren Öffnungen (3) umfasst, wobei die Zahl der Öffnungen auf der Platte zwischen 100 und 10000 liegt, senkrecht von oben nach unten durchströmt, wobei das zu verteilende Fluid eine Flüssigkeit ist, in der mindestens ein Stoff gelöst und/oder suspendiert vorliegt, wobei die Platte der Verteilvorrichtung senkrecht zur Hauptströmungsrichtung des durch sie hindurch tretenden Fluids sowie waagerecht angeordnet ist, und bei dem wenigstens ein Fluidstrom in die Verteilvorrichtung eingeleitet wird, wobei die Öffnungen (3) nur auf der Seite der Platte abgerundet oder angefast sind, von der das Fluid die Platte durchtritt, und die Fluidteilströme anschließend die Öffnungen (3) durchströmen.

Die Erfindung betrifft die Verwendung der zuvor im Zusammenhang mit dem Verfahren zum Aufteilen von Fluidströmen auf mehrere Fluidteilströme beschriebenen Verteilvorrichtung zur Reduzierung der Neigung zur Bildung von Ablagerungen an der Verteilvorrichtung.

Im Zusammenhang mit der vorliegenden Erfindung bezeichnen Fluide Flüssigkeiten, in denen mindestens ein Stoff gelöst und/oder suspendiert vorliegt.

Bei Flüssigkeiten, in denen mindestens ein Stoff gelöst und/oder suspendiert vorliegt, prägt sich die verringerte Neigung zur Bildung von Ablagerungen besonders aus.

Platten bezeichnen im Zusammenhang mit der vorliegenden Erfindung ebene Formkörper mit einer Dicke D. Die Geometrie der Platte in der Ebene ist unerheblich für die vorliegende Erfindung. Üblicherweise handelt es sich aber um kreisförmige Platten, da sie in Kolonnen, oder ähnliche, dem Fachmann allgemein als zylinderförmig bekannte, chemische Apparate waagerecht eingebaut werden sollen. Ist die räumliche Ausdehnung der Platte in der Ebene groß, so kann diese z.B. durch Streben oder andere verstärkende Maßnahmen auf der Seite, auf der die Fluidteilströme austreten, verstärkt werden.

Chemische Apparate im Sinne der Erfindung sind alle Apparate, in denen chemische Reaktionen oder Stoff- oder Wärmetransportprozesse ablaufen können, wie beispielsweise Reaktoren, insbesondere Rohrbündelreaktoren, oder Wärmeaustauscher, insbesondere Rohrbündelwärmeaustauscher oder Stofftrennapparate wie Kolonnen oder andere geeignete Apparate.

Die Dicke D der Platte wird üblicherweise so gewählt, dass die Platte ihrem eigenen Gewicht, sowie im Allgemeinen zusätzlich dem Gewicht des auf ihr befindlichen Fluids standhält. Dem Fachmann ist allgemein bekannt, wie er ausgehend von dem für die Platte verwendeten Material diese Dicke bestimmt. Alternativ kann die Dicke D der Platte auch sehr gering gewählt werden und stattdessen auf verstärkende Maßnahmen, z.B. in Form der oben beschriebenen Streben zurückgegriffen werden.

Die Platte kann aus allen im chemischen Apparatebau allgemein bekannten Werkstoffen bestehen. Üblicherweise besteht die Platte aus einem Werkstoff, der einfach spanabhebend bearbeitbar (z.B. durch Bohren oder Fräsen) ist, wie etwa Metalle oder Polymere. Bevorzugt besteht die Platte aus einem metallischen Werkstoff. Besonders bevorzugt besteht die Platte aus Stahl.

Ganz besonders bevorzugt besteht die Platte aus Edelstahl.

Die Verwendung von metallischen Werkstoffen, wie etwa Stahl oder Edelstahl ist besonders vorteilhaft, da diese Werkstoffe besonders fest sind, so dass die Dicke D gering gewählt bzw. auf verstärkende Maßnahmen z.B. durch Streben im Allgemeinen verzichtet werden kann. Edelstahl ist insbesondere vorteilhaft, weil er gegenüber den meisten Flüssigkeiten stabil gegenüber chemischem Angriff (z.B. Korrosion) ist. Dem Fachmann ist allgemein bekannt, wie er einen Edelstahl für die jeweilige Anwendung der hier beschriebenen erfindungsgemäßen Vorrichtung anhand seiner Legierungsbestandteile auswählt.

Für die Erfindung ist der verwendete Werkstoff nicht wesentlich. Wesentlich ist lediglich, dass der verwendete Werkstoff abgerundet und/oder angefast werden kann. Das Verfahren mit dem dies geschieht kann jedes Verfahren sein, das dem Fachmann dafür als geeignet erscheint.

Die Platte der Verteilvorrichtung wird bevorzugt exakt senkrecht zur Hauptströmungsrichtung des durch sie hindurch tretenden Fluids in dem chemischen Reaktionsapparat angeordnet. Besonders bevorzugt wird die Platte exakt waagerecht angeordnet.

Das erfindungsgemäß vorgesehene senkrechte Anordnen zur Hauptströmungsrichtung des durch sie hindurch tretenden Fluids ist vorteilhaft, weil hierdurch kein Teilbereich der Verteilvorrichtung mit mehr Fluid beaufschlagt wird, als ein anderer. Damit kann die Gleichverteilung sichergestellt werden. Die erfindungsgemäß vorgesehene waagerechte Anordnung ist insbesondere deshalb vorteilhaft, weil es sich bei dem zu verteilenden Fluid um eine Flüssigkeit handelt, die senkrecht von oben nach unten einen chemischen Apparat durchströmt. Hierdurch kann sichergestellt werden, dass kein Teilbereich der Verteilvorrichtung mit mehr Fluid beaufschlagt wird, als ein anderer.

Die Öffnungen in der Platte können jede geometrische Form haben. Bevorzugt sind Öffnungen in Form von Löchern oder Spalten. Besonders bevorzugt sind Öffnungen in Form von Löchern, ganz besonders bevorzugt in Form von kreisrunden Löchern.

Löcher und Spalte sind vorteilhaft, weil mit einfachen Mitteln in die Platte z.B. durch Bohren und/oder Fräsen eingebracht werden können. Andere geometrische Formen sind aufwendiger in ihrer Darstellung, aber ansonsten genauso geeignet, wie Löcher und Spalten.

Die Öffnungen in der Platte können gleichmäßig oder ungleichmäßig über die Platte der Verteilvorrichtung verteilt sein. Bevorzugt sind die Öffnungen gleichmäßig über die Platte verteilt.

Eine gleichmäßige Anordnung ist vorteilhaft, weil hierdurch eine gleichmäßige Verteilung des Fluids besser erreicht werden kann.

Üblicherweise richtet sich die Größe und Anzahl der Öffnungen nach der Menge an Fluid, die verteilt werden soll und wird üblicherweise so gewählt, dass die Reynoldszahl der Strömung des Fluids bei Austritt aus den Öffnungen nicht mehr als 1 beträgt.

Die Reynoldszahl bezeichnet im Zusammenhang mit der vorliegenden Erfindung die dem Fachmann allgemein bekannte dimensionslose Kennzahl

$$Re = \frac{u \cdot d}{\nu}$$

, wobei $u$ die Austrittsgeschwin-digkeit des Fluidteilstroms aus den Öffnungen ist, $\nu$ die kinematische Viskosität des Fluids bezeichnet und $d$ den Durchmesser der Öffnungen bezeichnet, wenn diese kreisförmig sind, bzw. die Spaltbreite bezeichnet, wenn diese spaltförmig sind, bzw. die charakteristische Länge des Öffnung, ermittelt nach dem Fachmann allgemein bekannten Grundsätzen, bezeichnet, wenn keine der beiden zuvor genannten Geometrien vorliegt.

Erfindungsgemäß liegt die Zahl der Öffnungen auf einer Platte zwischen 100 und 10000, bevorzugt zwischen 100 und 5000.

Die Öffnungen der Verteilvorrichtung sind erfindungsgemäß nur auf der Seite der Platte (2), von der das Fluid die Platte durchtritt, abgerundet oder angefast.

Abgerundet bezeichnet im Zusammenhang mit der vorliegenden Erfindung, dass eine geometrische Unstetigkeit z.B. ein 90° Winkel, durch eine stetige Geometrie, z.B. im Sinne eines Halbkreises ersetzt wird.

Anders ausgedrückt bedeutet "abgerundet" im Zusammenhang mit der vorliegenden Erfindung, dass im Bereich des Eintritts in eine Öffnung keine Kanten ausgebildet sind. Statt dessen geht die ebene Oberfläche der Platte (außerhalb der Öffnungen) ohne die Ausbildung von Kanten in die Oberfläche der Öffnungen im Bereich des Durchtritts durch die Platte über.

Angefast bezeichnet im Zusammenhang mit der vorliegenden Erfindung, dass eine geometrische Unstetigkeit z.B. ein 90° Winkel, durch eine ebenfalls unstetige, aber gegenüber der ursprünglichen geometrischen Unstetigkeit einer geometrisch stetigen Geometrie ähnlicheren (z.B. zwei 45° Winkel) Geometrie ersetzt wird.

Anders ausgedrückt bedeutet "angefast" im Zusammenhang mit der vorliegenden Erfindung, dass im Bereich des Eintritts in eine Öffnung keine scharfen Kanten ausgebildet. Statt dessen geht die ebene Oberfläche der Platte (außerhalb der Öffnungen) ohne die Ausbildung von scharfen Kanten (d.h. bevorzugt ohne Winkel $\alpha$, $\beta \geq 60$) in die Oberfläche der Öffnungen im Bereich des Durchtritts durch die Platte über.

Dabei ist der Winkel $\alpha$ der Winkel zwischen der ebenen Oberfläche der Platte und der Oberfläche der Öffnung auf der Eintrittsseite des Fluidteilstroms und der Winkel $\beta$ der Winkel zwischen der ebenen Oberfläche der Platte und der Oberfläche der Öffnung auf der Austrittsseite des Fluidteilstroms. Dies ist in Figur 3 illustriert. Dabei steht das Referenzzeichen 4 für den Winkel $\alpha$ und das Referenzzeichen 5 für den Winkel ß.

Bevorzugt zeichnet sich eine Verteilvorrichtung, die mindestens eine Platte (2) mit Öffnungen (3) umfasst, dadurch aus, dass der durchströmte Querschnitt im Bereich des Durchtritts durch die Platte (d.h. bevorzugt im Bereich von 30% - 70 % der durchströmten Länge der Öffnung, die der Dicke D der Platte entspricht) kleiner ist als im Bereich des Eintritts in die Öffnung.

Sind die Öffnungen in der Platte abgerundet, so sind die Öffnungen bevorzugt so abgerundet, dass der Radius R des durch Abrunden entstehenden Teilkreises kleiner ist, als die Dicke D der Platte. Sind die Öffnungen in der Platte angefast, so sind die Öffnungen bevorzugt so angefast, dass der Winkel zwischen 40° und 60° beträgt. Ebenfalls bevorzugt ist die Öffnung so angefast, dass die Anfasung sich nicht bis zur Hälfte der Dicke D der Platte erstreckt.

Die vorliegende Erfindung wird nachfolgend anhand der Figuren näher erläutert, ohne die Erfindung hierauf zu beschränken.

Fig. 1 zeigt eine Verteilvorrichtung bestehend aus einer kreisförmigen Platte 2 mit gleichmäßig hierauf verteilten Öffnungen 3 in Form vom Löchern.

Fig. 2 zeigt eine für die erfindungsgemäße Verwendung geeignete Verteilvorrichtung bestehend aus einer kreisförmigen Platte 2 mit gleichmäßig hierauf verteilten Öffnungen 3 in Form vom Spalten.

Fig. 3 zeigt einen Schnitt durch eine der in Fig. 1 gezeigten Öffnungen 3, wobei die Öffnung in einem Winkel $\alpha$, $\beta$ auf beiden Seiten angefast sind (nicht erfindungsgemäß). Dabei steht das Referenzzeichen 4 für den Winkel $\alpha$ und das Referenzzeichen 5 für den Winkel $\beta$. D steht für die Dicke der Platte 2.

Fig. 4 zeigt einen Schnitt durch eine der in Fig. 2 gezeigten Öffnungen 3, wobei die Öffnung auf einer Seite der Platte mit einem Radius R < D abgerundet ist. Dabei steht D für die Dicke der Platte 2.

Fig. 5 zeigt eine graphische Darstellung der Versuchsergebnisse des Beispiels 1.

Fig. 6 zeigt schematisch eine Versuchsanordnung (Beispiel 2).

Die vorliegende Erfindung wird nachfolgend anhand von Beispielen näher erläutert, ohne sie jedoch hierauf zu beschränken.

## Beispiele

## Beispiel 1:

Es wurden Versuche zum Ablagerungs- und Kristallisationsfouling in einem Laborversuch durchgeführt. Als Testflüssigkeit für die Versuche zum Ablagerungsfouling diente Butyl Rubber / Hexan und für die Versuche zum Kristallisationsfouling diente eine wässrige Kochsalzlösung. Die Versuchsapparatur bestand aus einem Behältnis, in das kontinuierlich Testflüssigkeit strömte. Das Behältnis wies an einer der senkrechten Wände (Dicke: 2mm) verschiedenartige Öffnungen auf, aus denen die Testflüssigkeit wieder in Form eines Strahls bogenförmig ausströmte. Die Öffnungen waren zwei kreisrunde Löcher (Durchmesser: 2mm), wobei das erste Loch scharfkantig (zylinderförmig) ausgebildet war und das zweite eine Fase aufwies (erfindungsgemäß). Es wurde eine 45° Fase gewählt, die die Hälfte der Wanddicke einnahm. Im Standzeitversuch wurde die Ablagerung (Fouling) an den verschiedenen Öffnungen untersucht. Die Bewertung erfolgte einerseits durch Demontage der Lochplatte nach Versuchende und visuelle Begutachtung der Ablagerungen an bzw. in den Löchern, und andererseits durch Messung der Wurfweiten bzw. Auftreffpunkthöhen h an der gegenüberliegenden Wand, die in horizontaler Richtung ca. 5 cm von den beiden Öffnungen entfernt positioniert war. Dabei steht A in Figur 5 für das scharfkantige Loch (ohne Fase). B in Figur 5 steht für das angefaste Loch (mit Fase). Sowohl die visuelle Begutachtung als auch die Messungen zeigten, dass für beide untersuchten Mechanismen der Ablagerung (Kristallisations- und Ablagerungsfouling) eine Anfasung (erfindungsgemäß) oder Abrundung (erfindungsgemäß) der Ausströmlöcher zu einer geringeren Ablagerungsneigung führt. Figur 5 zeigt eine graphische Auftragung der gemessenen Auftreffpunkthöhen h zu verschiedenen Zeitpunkten t.

## Beispiel 2:

Die Vorrichtung zur Aufteilung von Flüssigkeitsströmen wurde in Form einer ebenen, runden Platte in einer Screeningversuchsreihe zur Untersuchung des Foulingverhaltens von Verteilerlöchern eingesetzt und bei Temperaturen zwischen 80°C und 220°C untersucht. Die Edelstahlplatte der Dicke von 2 mm wurde mit 2 geometrisch verschiedenen Löchern (Durchmesser je 1,4 mm für die Gewährleistung der Äquivalenz der effektiven Durchflussflächen) versehen (Figur 6). Dabei ist Loch C eine einfache gerade Bohrung. Das zweite Loch D wurde mit einer Fase (45°) angefertigt. Als Testflüssigkeit wurde eine mittelviskose Flüssigkeit der Dichte zwischen 700 und 1200 kg/m³ mit einem Viskositätsbereich von 1 mPas bis 100 mPas, deren Oberflächenspannung im Bereich zwischen 15 bis 50 mN/m liegt, verwendet. Die Flüssigkeit enthält gelöste Bestandteile. Die Flüssigkeit unterliegt mehreren Zersetzungsreaktionen, die zum Teil mechanistisch nicht aufgeklärt sind. Dabei fallen sowohl feste Bestandteile in Form feinster Kristalle (während des Versuches entsteht eine Suspension) aus als auch Bestandteile in Form von hochmolekularen undefinierten belagbildenden Produkten (Fouling).

Das Einsatzfluid wurde in einem beheiztem Kreislauf unter Schutzatmosphäre geführt, wobei die Verteilerplatte mit einem Flüssigkeitsstand zwischen 0 und 300 mm beschicht wurde. Die Umpumprate im Kreislauf des durch die Platte durchtretenden Fluids bestimmt das Niveau der Flüssigkeit auf der Lochplatte, wobei das Niveau der Flüssigkeit das Abfließverhalten bzw. die Abfließgeschwindigkeit durch die Verteilerlöcher aufgrund der hydrostatischen Höhe bestimmt.

Die Versuche dauerten mit jeweils einer Unterbrechung von 2 Tagen effektiv 10 Tage. Aufgrund der Kratergrößen im Belag auf der Platte um die Löcher herum konnte festgestellt werden, dass das Fluid durch das angefaste Loch besser abfloss (höhere Abfließgeschwindigkeit an Lochrändern). Die Edelstahllochplatte war am Ende des Versuchs mit sehr festem und auch bei hohen Temperaturen schwer entfernbarem, pastösem Präzipitat belegt, die angefaste Löcher waren im Vergleich zu geraden Löchern jedoch durchgängig.

Insbesondere beim niedrigen Flüssigkeitsstand an der Verteilerplatte konnte ein Unterschied in dem Abfließverhalten des Fluids durch die zwei Löchertypen verschiedener Geometrien beobachtet werden. Das Abfließen des Fluids durch das Verteilerloch mit Fase zeigte im Vergleich zum geraden Loch ein vorteilhaftes Verhalten. Bei sehr niedrigem hydrostatischem Druck auf der Platte (Standhöhe der Flüssigkeit zwischen 10-20 mm) war aufgrund des geringeren Druckverlustes das angefaste Loch von Anfang an durchgängig (geringere Spannugsfaktoren und geringeres Druckabfall). Hingegen benötigte das gerade Loch eine höhere Standhöhe (40-50 mm), um ein gleichmäßiges Abfließen des Fluids beobachten zu können. Die Versuche haben eindeutig gezeigt, dass das Verteilerloch mit angefasten Geometrie während der stationären Fahrweise besseres Abfließverhalten zeigt als das scharfkantige Loch.

## Patentansprüche

1. Verwendung einer Verteilvorrichtung zum gleichmäßigen Aufteilen von Fluidströmen auf mehrere Teilströme in chemischen Apparaten, die mindestens eine Platte (2) mit mehreren Öffnungen (3) umfasst, wobei die Zahl der Öffnungen auf der Platte zwischen 100 und 10000 liegt, wobei die Öffnungen (3) nur auf einer Seite der Platte abgerundet oder angefast sind, zur Reduzierung der Neigung zur Bildung von Ablagerungen an der Verteilvorrichtung, wobei
die Verteilvorrichtung in einem chemischen Apparat angeordnet ist, welchen ein zu verteilendes Fluid senkrecht von oben nach unten durchströmt, wobei das zu verteilende Fluid eine Flüssigkeit ist, in der mindestens ein Stoff gelöst und/oder suspendiert vorliegt, wobei die Platte der Verteilvorrichtung senkrecht zur Hauptströmungsrichtung des durch sie hindurch tretenden Fluids sowie waagerecht angeordnet ist, und wobei die abgerundete oder angefaste Seite der Platte die Seite der Platte ist, von der das Fluid die Platte durchtritt.

**2.** Verwendung nach Anspruch 1, bei der die Öffnungen (3) die Form von Löchern oder Spalten haben.

**3.** Verwendung nach einem der Ansprüche 1 oder 2, bei der die Öffnungen (3) abgerundet sind, wobei der Radius R des durch Abrunden entstehenden Teilkreises kleiner ist, als die Dicke D der Platte (2).

**4.** Verwendung nach einem der Ansprüche 1 bis 3, bei der der Winkel zwischen der ebenen Oberfläche der Platte (2) auf der angefasten Seite und der Oberfläche der Öffnung (3) im Bereich des Durchtritts durch die Platte (2) zwischen 40° und 60° beträgt.

**5.** Verwendung nach einem der Ansprüche 1 bis 4, bei der die Öffnungen (3) so angefast sind, dass die Anfasung sich nicht bis zur Hälfte der Dicke D der Platte (2) erstreckt.

**6.** Verwendung nach einem der Ansprüche 1 bis 5, bei der die Teilströme beim Austritt aus den Öffnungen (3) mit einer Reynoldszahl von ≤ 1 strömen.

**7.** Verwendung nach einem der Ansprüche 1 bis 6, bei der dem die Zahl der Öffnungen auf der Platte zwischen 100 und 5000 liegt.

**Claims**

**1.** Use of a distribution device for uniformly dividing fluid streams into a plurality of substreams in chemical apparatuses, which comprises at least one plate (2) having a plurality of openings (3), wherein the number of openings in the plate is in the range from 100 to 10 000 and the openings (3) are rounded or chamfered on only one side of the plate, for reducing the tendency for the formation of deposits on the distribution device, wherein

the distribution device is arranged in a chemical apparatus through which a fluid to be divided flows vertically from the top downwards, wherein the fluid to be divided is a liquid in which at least one material is dissolved and/or suspended, wherein the plate of the distribution device is arranged perpendicularly to the main flow direction of the fluid passing through it and is also arranged horizontally, and wherein the rounded or chamfered side of the plate is the side of the plate from which the fluid passes through the plate.

**2.** Use according to Claim 1, wherein the openings (3) have the shape of holes or slits.

**3.** Use according to either Claim 1 or 2, wherein the openings (3) are rounded and the radius R of the segment of a circle formed by rounding is less than the thickness D of the plate (2).

**4.** Use according to any of Claims 1 to 3, wherein the angle between the flat surface of the plate (2) on the chamfered side and the surface of the opening (3) in the region of passage through the plate (2) is in the range from 40° to 60°.

**5.** Use according to any of Claims 1 to 4, wherein the openings (3) are chamfered in such a way that the chamfering does not extend to half the thickness D of the plate (2).

**6.** Use according to any of Claims 1 to 5, wherein the substreams flow with a Reynolds number of ≤ 1 on exiting the openings (3).

**7.** Use according to any of Claims 1 to 6, wherein the number of openings in the plate is in the range from 100 to 5000.

**Revendications**

**1.** Utilisation d'un dispositif de répartition qui est destiné à diviser de manière régulière des flux de fluide en plusieurs flux partiels dans des appareils chimiques et qui comprend au moins une plaque (2) pourvue d'une pluralité d'ouvertures (3), le nombre d'ouvertures sur la plaque étant compris entre 100 et 10000, les ouvertures (3) n'étant arrondies ou chanfreinées que d'un côté de la plaque afin de réduire la tendance à la formation de dépôts sur le dispositif de répartition,

le dispositif de répartition étant disposé dans un appareil chimique à travers lequel un fluide à répartir s'écoule verticalement de haut en bas, le fluide à répartir étant un liquide dans lequel au moins une substance est présente sous forme dissoute et/ou suspendue, la plaque du dispositif de répartition étant disposée perpendiculairement à la direction d'écoulement principale du fluide la traversant et horizontalement, et le côté arrondi ou chanfreiné de la plaque étant le côté de la plaque à partir duquel le fluide traverse la plaque.

**2.** Utilisation selon la revendication 1, dans laquelle les ouvertures (3) se présentent sous la forme de trous ou de fentes.

**3.** Utilisation selon l'une des revendications 1 ou 2, dans laquelle les ouvertures (3) sont arrondies, le rayon R du cercle primitif généré par arrondi étant inférieur à l'épaisseur D de la plaque (2).

**4.** Utilisation selon l'une des revendications 1 à 3, dans laquelle l'angle entre la surface plane de la plaque (2) du côté chanfreiné et la surface de l'ouverture (3) au niveau du passage à travers la plaque (2) est compris entre 40° et 60°.

**5.** Utilisation selon l'une des revendications 1 à 4, dans laquelle les ouvertures (3) sont chanfreinées de telle sorte que le chanfrein ne s'étende pas jusqu'à la moitié de l'épaisseur D de la plaque (2).

**6.** Utilisation selon l'une des revendications 1 à 5, dans laquelle les flux partiels s'écoulent avec un nombre de Reynolds $\leq 1$ lorsqu'ils sortent des ouvertures (3).

**7.** Utilisation selon l'une des revendications 1 à 6, dans laquelle le nombre d'ouvertures sur la plaque est compris entre 100 et 5000.

**Fig. 1:**

**Fig. 2:**

Fig. 3:

Fig. 4:

Fig. 5:

Fig. 6:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5161315 A
- EP 0721798 A2
- EP 0299279 A1
- JP 51110478 A
- EP 0111941 A2
- US 3853986 A
- JP S5916502 A
- WO 0172409 A1
- WO 2007079939 A1
- IN 192183 A
- DE 2752391 A

**In der Beschreibung aufgeführte Nicht-Patentliteratur**

- **H. MÜLLER-STEINHAGEN.** Heat-Exchanger Fouling - Mitigation and Cleaning Technologies. Publico Publications, 2000, 8-9